# EUROPÄISCHE PATENTSCHRIFT

(11) **EP 1 472 888 B1**
(45) Veröffentlichungstag und Bekanntmachung des Hinweises auf die Patenterteilung: **01.09.2010**
(21) Anmeldenummer: 03704286.8
(22) Anmeldetag: 04.02.2003
(51) Int. Cl.: H04N 7/50, H04N 7/34

(54) **KONTEXTSENSITIVE KODIERUNG UND DEKODIERUNG EINES VIDEODATENSTROMS**
CONTEXT-SENSITIVE ENCODING AND DECODING OF A VIDEO DATA STREAM
CODAGE ET DECODAGE, SENSIBLES AU CONTEXTE, D'UN FLUX DE DONNEES VIDEO

(30) Priorität: 05.02.2002 DE 10204617
(43) Veröffentlichungstag der Anmeldung: 03.11.2004
(73) Patentinhaber: SIEMENS AKTIENGESELLSCHAFT, 80333 München (DE)
(72) Erfinder: BÄSE, Gero, 81371 München (DE); ILLGNER-FEHNS, Klaus, 81549 München (DE); KUTKA, Robert, 82269 Geltendorf (DE); PANDEL, Jürgen, 83620 Feldkirchen-Westerham (DE)
(86) Internationale Anmeldenummer: PCT/DE2003/000306
(87) Internationale Veröffentlichungsnummer: WO 2003/067895

(56) Entgegenhaltungen:
- US-A- 5 471 207
- US-A- 5 764 374
- PATENT ABSTRACTS OF JAPAN vol. 2000, no. 07, 29. September 2000 (2000-09-29) & JP 2000 115781 A (CANON INC), 21. April 2000 (2000-04-21) & US 6 549 676 B1 (NAKAYAMA ET AL.) 15. April 2003 (2003-04-15)
- PATENT ABSTRACTS OF JAPAN vol. 2000, no. 22, 9. März 2001 (2001-03-09) & JP 2001 136524 A (RICOH CO LTD), 18. Mai 2001 (2001-05-18)
- WEINBERGER M J ET AL: "LOCO-I: A LOW COMPLEXITY, CONTEXT-BASED, LOSSLESS IMAGE COMPRESSION ALGORITHM" DATA COMPRESSION CONFERENCE, PROCEEDINGS. DCC, IEEE COMPUTER SOCIETY PRESS, LOS ALAMITOS, CA, US, 31. März 1996 (1996-03-31), Seiten 140-149, XP000614253

## Beschreibung

Die Erfindung betrifft Verfahren zur Kompression und Dekompression eines Videodatenstroms. Die Erfindung betrifft ferner Vorrichtungen zur Durchführung der Verfahren.

Derartige Kompressionsverfahren sind insbesondere notwendig, um Videodaten über paketorientierte Datennetze zu transportieren, denn die Bandbreite von paketorientierten Datennetzen ist eng begrenzt. Es sind daher standardisierte Verfahren, wie beispielsweise MPEG-1, MPEG-2 und H.26X entwickelt worden, mit denen sich Videodaten komprimieren lassen. Die standardisierten Verfahren arbeiten mit der bewegungskompensierenden Hybrid-Codierung, einer Kombination aus verlustloser Redundanzreduktion und verlustbehafteter Irrelevanzreduktion.

Am meisten trägt zur Kompression die sogenannte bewegungskompensierende Prädiktion bei. Die bewegungskompensierende Vorhersage oder auch Prädiktion nutzt die Ähnlichkeit aufeinanderfolgender Bilder aus, indem sie das aktuell zu codierende Bild aus bereits übertragenen Bildern vorhersagt. Da sich meist nur bestimmte Teile aufeinanderfolgender Bilder bewegen, zerlegt ein Codierer das aktuell zu codierende Bild in rechteckige Makroblöcke, die meist 8 x 8 oder 16 x 16 Bildpunkte groß sind. Für jeden dieser Makroblöcke sucht der Codierer aus den bereits übertragenen Bildern passende Makroblöcke heraus und berechnet deren Verschiebung zu den Makroblöcken des aktuell zu codierenden Bildes. Die Verschiebungen der Makroblöcke werden durch Bewegungsvektoren beschrieben, die vom Codierer anhand von Codetabellen codiert werden.

Da das aktuell zu codierende Bild nicht in jedem Fall durch die Verschiebung von Makroblöcken bereits übertragener Bilder konstruiert werden kann, beispielsweise bei neu ins Bild kommenden Objekten, muss auch der Vorhersagefehler oder Prädiktionsfehler vom Codierer an den Decodierer übertragen werden. Dieser Prädiktionsfehler ergibt sich aus der Differenz zwischen dem tatsächlichen aktuell zu codierenden Bild und dem durch Verschieben der Makroblöcke aus vorhergehenden Bildern konstruierten Prädiktionsbild.

US-5 764 374 beschreibt ein verlustloses Bildkompressionssystem mit Kontextbestimmung, Prädiktion und Golomb-Codierung, wobei die Parameter des Golomb-Codes in Abhängigkeit vom Kontext und zeitlichen Verlauf bestimmt werden.

Da die Prädiktionsfehler benachbarter Bildpunkte in nicht oder nur schlecht prädizierbaren Bereichen korrelieren, wird zur weiteren Redundanzreduktion eine Transformation der Prädiktionsfehler durchgeführt. Je nach Kompressionsverfahren kommen dabei verschiedene Transformationsverfahren zur Anwendung. Üblich sind beispielsweise die diskrete Wavelet-Transformation (DWT) oder die diskrete Cosinus-Transformation (DCT). Durch die diskrete Cosinus-Transformation wird jeder Makroblock aus 8 x 8 Bildpunkten in eine Matrix von 8 x 8 Spektralkoeffizienten transformiert. Dabei stellt der erste Koeffizient die mittlere Helligkeit des Blocks dar, weshalb diese auch als "Gleichanteil" oder "DC-Koeffizient" bezeichnet wird. Die restlichen Koeffizienten spiegeln mit steigender Indexzahl höherfrequente Anteil der Helligkeitsverteilung wider und werden daher als "Wechselanteile" oder "AC-Koeffizienten" bezeichnet.

Um die erforderliche Datenrate weiter zu verringern, werden die Spektralkoeffizienten vor der weiteren Codierung quantisiert. Wenn sich das Prädiktionsfehlersignal von Bildpunkt zu Bildpunkt nur langsam ändert, sind nach der Quantisierung die meisten hochfrequenten Spektralkoeffizienten gleich Null und müssen daher nicht übertragen werden.

Da nach der Transformation die meisten Spektralkoeffizienten Null sind, werden die Spektralkoeffizienten im weiteren Verlauf des Verfahrens durch Lauflängencodierung zusammengefasst und anschließend mit Hilfe einer Codetabelle mit Codeworten variabler Länge codiert.

Ausgehend von diesem Stand der Technik liegt der Erfindung die Aufgabe zugrunde, Verfahren zur Kompression und Dekompression von Videodaten anzugeben, die im Vergleich zu bekannten Verfahren einen höheren Kompressionsgrad aufweisen.

Diese Aufgabe wird erfindungsgemäß durch ein Verfahren zur Kompression von Videodaten, bei dem die Videodaten eines Bildes durch Bildsymbole dargestellt werden, mit folgenden Verfahrensschritten gelöst:
- Auslesen von Bildsymbolen aus einem Bildspeicher;
- Sortieren der Bildsymbole mit Hilfe eines Kontextschalters auf verschiedene Codierzweige zu Bildsymbolgruppen, die jeweils unterschiedlichen Kontexten zugeordnet sind, wobei der Kontextschalter zu einem vorbestimmten Zeitpunkt in eine vorbestimmte Position gebracht und im folgenden in Abhängigkeit vom jeweiligen Kontext des zu übertragenden Bildsymbols betätigt wird;
- Entropiecodieren der Bildsymbolgruppen und Zusammensetzen der von den Codierzweigen ausgegebenen Daten zu einem komprimierten Videodatenstrom.

Diese Aufgabe wird ferner erfindungsgemäß durch ein Verfahren zur Dekompression eines komprimierten Videodatenstroms, bei dem Videodaten eines Bildes darstellende Bildsymbole aus dem Videodatenstrom extrahiert werden, mit den folgenden Verfahrensschritten gelöst:
- Aufteilen des Videodatenstroms in Bitstromsegemente, die jeweils einem Kontext zugeordnet sind;
- Entropiedecodieren der Bitstromsegmente zu Bildsymbolgruppen; und
- Übertragung der Bildsymbole in den auf verschieden Decodierzweige verteilten Bildsymbolgruppen über einen Kontextschalter in einen Bildspeicher, wobei der Kontextschalter zu einem vorbestimmten Zeitpunkt in einer vorbestimmten Stellung steht und im Folgenden in Abhängigkeit vom Kontext der Bildsymbole betätigt wird.

Dem Verfahren zur Kompression und Dekompression gemäß der Erfindung liegt die Erkenntnis zugrunde, dass die Auftrittswahrscheinlichkeit eines Bildsymbols stark vom jeweiligen Kontext abhängen kann. Das Verfahren gemäß der Erfindung nützt diesen Umstand aus, indem die Bildsymbole in Abhängigkeit vom jeweiligen Kontext in die Codierzweige sortiert werden. Die auf die Codierzweige verteilten Bildsymbole können dann effektiv mit einem an die Häufigkeitsverteilung der Bildsymbole im jeweiligen Kontext angepassten Code mit variabler Wortlänge kodiert werden. Ein solcher Code wird nachfolgend auch als Entropiecode bezeichnet. Von besonderem Vorteil ist, dass dabei ein an die tatsächliche Häufigkeitsverteilung der Bildsymbole im jeweiligen Kontext angepasster Code verwendet werden kann.

Bei einer bevorzugten Ausführungsform der Erfindung werden binäre Symbole auf die Codierzweige verteilt und anschließend einer Lauflängencodierung unterzogen, bei der die Zahl von aufeinanderfolgenden gleichen Symbolen gezählt und durch eine dem Symbol zugeordnete Zahl codiert wird.

Diese Ausführungsform des Verfahrens gemäß der Erfindung nützt den Umstand aus, dass in einem bestimmten Kontext eine große Zahl von gleichen Symbolen auftritt, die effektiv durch eine Lauflängencodierung komprimiert werden kann. Indem die Bildsymbole in Abhängigkeit vom jeweiligen Kontext in die Codierzweige sortiert werden, so dass in den Codierzweigen Gruppen von Bildsymbolen vorhanden sind, die jeweils eine große Zahl gleicher Bildsymbole aufweisen, wird die Voraussetzung für eine effektive Lauflängencodierung geschaffen.

Bei einer weiteren bevorzugten Ausführungsform wird im jeweiligen Codierzweig oder Decodierzweig für den Code mit variabler Wortlänge ein analytisch berechenbarer Entropiecode verwendet, der während des Kompressions- oder Dekompressionsvorgangs an die Häufigkeitsverteilung der Bildsymbole im jeweiligen Kontext angepasst wird.

Durch die Verwendung eines analytisch generierbaren Codes kann auf fest abgespeicherte Codetabellen, die für jeden möglichen Kontext einen angepassten Code beinhalten, verzichtet werden. Vielmehr lassen sich die verwendeten Entropiecodes leicht an die tatsächlich auftretenden Häufigkeitsverteilungen anpassen. Die genauen Anpassungen an die tatsächlich auftretenden Häufigkeitsverteilungen lassen eine effiziente Codierung der Bildsymbole zu, was die zur Übertragung erforderliche Bandbreite weiter reduziert.

Bei einer weiteren bevorzugten Ausführungsform wird der analytisch berechenbare Golomb-Code für die Codierung der Bildsymbole verwendet.

Der Golomb-Code eignet sich besonders für die fortlaufende Anpassung an die jeweilige Häufigkeitsverteilung der Bildsymbole, da dieser Code in Abhängigkeit von einem einzigen Parameter fortlaufend berechenbar und damit auf einfache Weise parametrierbar ist. Dieses Code bietet darüber hinaus den Vorteil, dass er im Gegensatz zur arithmetischen Codierung fehlertolerant ist.

Weitere Einzelheiten der Erfindung sind Gegenstand der abhängigen Ansprüche.

Nachfolgend wird die Erfindung im Einzelnen anhand der beigefügten Zeichnung erläutert. Es zeigen:
- Figur 1: ein Blockdiagramm, das den Aufbau eines Codierers und den Ablauf des bei der Kompression verwendeten Verfahrens zeigt;
- Figur 2: ein Diagramm, das die Bildsymbole eines Makroblocks eines Videobilds zeigt, in dem das zu übertragende Bildsymbol und der zugehörige Kontext eingetragen sind;
- Figur 3: ein Blockdiagramm einer kontextsensitiven Codiereinheit, das gleichzeitig den Ablauf des kontextsensitiven Codierens veranschaulicht;
- Figur 4: ein Blockdiagramm mit dem Aufbau eines Decodierers, das gleichzeitig den Ablauf des Decodierverfahrens veranschaulicht;
- Figur 5: ein Blockdiagramm einer kontextsensitiven Decodiereinheit, in dem auch der Ablauf des kontextsensitiven Decodierverfahrens dargestellt ist; und
- Figur 6: ein Blockdiagramm eines abgewandelten Codierers.

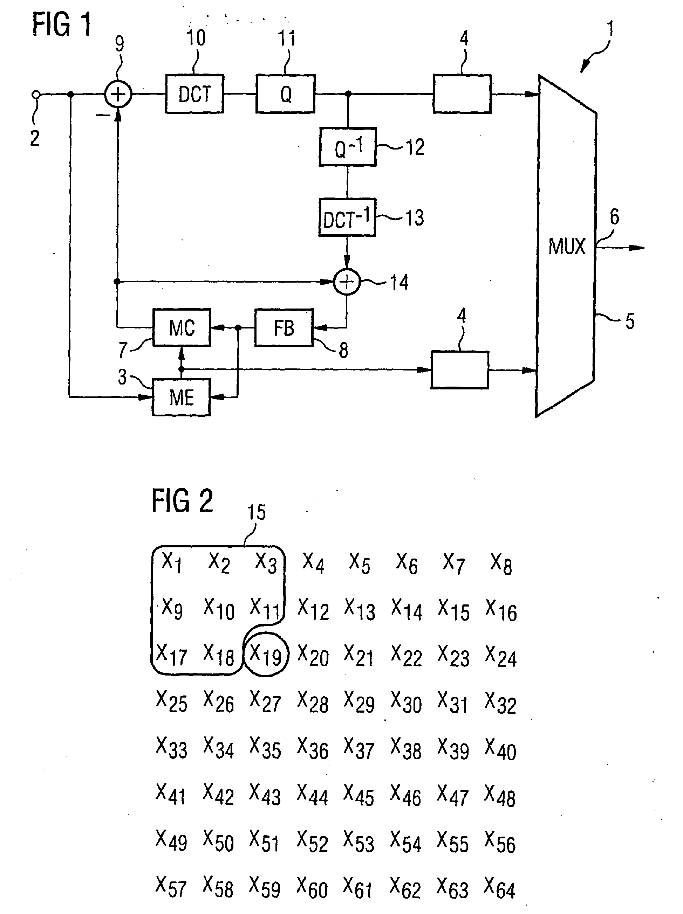

Figur 1 zeigt einen Encoder oder Codierer 1, der nach dem Prinzip der bewegungskompensierenden Hybrid-Codierung arbeitet. Der Codierer 1 verfügt über einen Eingang 2, über den der Videodatenstrom dem Codierer 1 zugeführt wird. Insbesondere werden über den Eingang 2 dem Codierer Videodaten einer Bildfolge zugeführt. Eine Bewegungsschätzeinheit 3 segmentiert ein aktuell zu codierendes Bild des Videodatenstroms in rechteckige Makroblöcke, die meist 8 x 8 oder 16 x 16 Bildpunkte groß sind. Für jeden dieser Makroblöcke sucht die Bewegungsschätzeinheit 3 aus den bereits übertragenen Bildern passende Makroblöcke heraus und berechnet deren Bewegungsvektoren. Die Bewegungsvektoren können dann mit Hilfe von herkömmlichen Codetabellen oder aber auch mit Hilfe einer nachfolgend näher beschriebenen, kontextsensitiven Codiereinheit 4 codiert und über einen Multiplexer 5 in einen an einem Ausgang 6 ausgegebenen Bitstrom eingebettet werden. Die von der Bewegungsschätzeinheit 3 berechneten Bewegungsvektoren der Makroblöcke werden auch einem Bewegungskompensator 7 mitgeteilt, der ausgehend von den in einem Bildspeicher 8 abgespeicherten, bereits übertragenen Bildern das sich durch die Verschiebung der Makroblöcke der bereits übertragenen Bildern ergebende Prädiktionsbild berechnet. Dieses Prädiktionsbild wird in einem Subtrahierer 9 von dem ursprünglichen Bild subtrahiert, um einen Vorhersagefehler zu erzeugen, der einem diskreten Cosinus-Transformator 10 mit nachfolgendem Quantisierer 11 zugeführt wird. Der Vorhersagefehler wird auch als Prädiktionsfehler oder als Textur bezeichnet. Der transformierte und quantisierte Vorhersagefehler wird an eine weitere, kontextsensitive Codiereinheit 4 weitergeleitet, die die transformierten und quantisierten Vorhersagefehlerdaten in Bitstromsegmente wandelt, die von dem Multiplexer 5 ausgelesen und in den am Ausgang 6 ausgegebenen Bitstrom eingebettet werden.

Durch die Verarbeitung im diskreten Cosinus-Transformator 10 werden die Makroblöcke mit beispielsweise 8 x 8 Bildpunkten als Matrix von 64 Spektralkoeffizienten dargestellt. Dabei enthält der erste Koeffizient die mittlere Helligkeit und wird deshalb auch als Gleichanteil oder DC-Koeffizient bezeichnet. Die restlichen Spektralkoeffizienten geben mit steigender Indexzahl höherfrequente Anteile der Helligkeitsverteilung wieder, weshalb sie als Wechselanteile oder AC-Koeffizienten bezeichnet werden. Durch den nachfolgenden Quantisierer 11 wird die Datenrate weiter verringert. Denn bei flächigen Elementen ändert sich der Vorhersagefehler von Bildpunkt zu Bildpunkt nur langsam, so dass nach der Verarbeitung im Quantisierer 11 die hochfrequenten Spektralkoeffizienten gleich Null sind und daher gar nicht erst übertragen werden müssen.

Der Quantisierer 11 berücksichtigt darüber hinaus auch psychovisuelle Effekte. Denn das menschliche Gehirn nimmt niederfrequente Bildkomponenten, nämlich flächenmäßig ausgedehnte Bildkomponente, wesentlich deutlicher wahr als hochfrequente Bildkomponente, nämlich Details. Daher werden die hochfrequenten Spektralkoeffizienten gröber quantisiert als die niederfrequenten Spektralkoeffizienten.

Um die im Bildspeicher 8 abgelegten bereits übertragenen Bilder nachzuführen, werden die Spektralkoeffizienten einem inversen Quantisierer 12 und einem inversen diskreten Cosinus-Transformator 13 zugeführt und die so rekonstruierten Daten des Vorhersagefehlers auf das von dem Bewegungskompensator 7 erzeugte Prädiktionsbild in einem Addierer 14 aufaddiert. Das so erzeugte Bild entspricht demjenigen Bild, das beim Decodieren entsteht. Dieses Bild wird im Bildspeicher 8 abgelegt und dient der Bewegungsschätzeinheit 3 als Basis für die Berechnung der Bewegungsvektoren des folgenden Bildes.

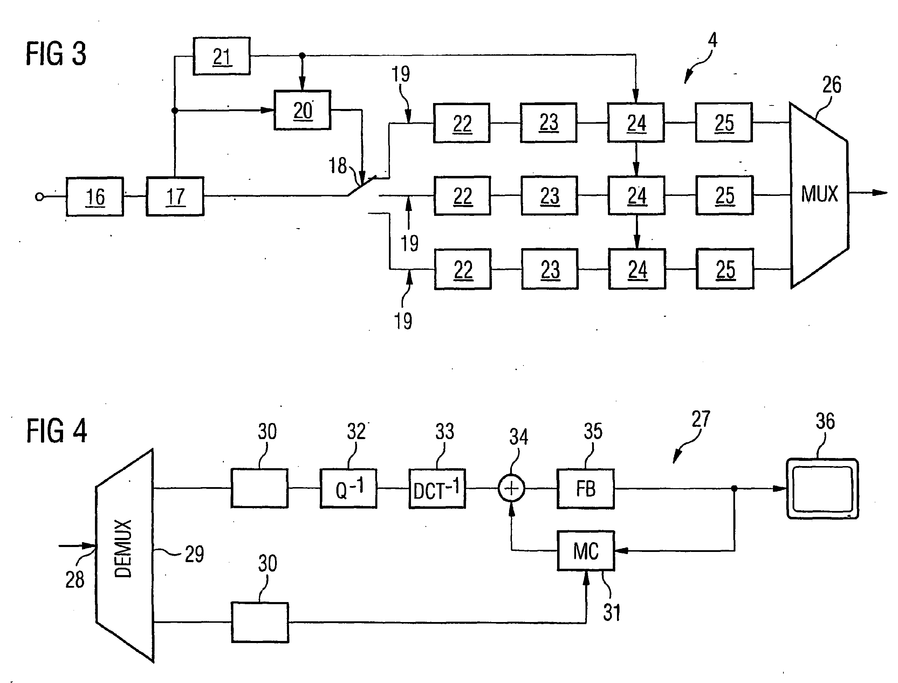

Der Aufbau und die Funktion der kontextsensitiven Codiereinheit 4 wird nachfolgend anhand Figur 2 und 3 erläutert.

In Figur 2 dienen Variablen x₁ bis x₆₄ zur Darstellung der vom Quantisierer 11 ausgegebenen Spektralkoeffizienten. Der Spektralkoeffizient x₁ stellt den Gleichanteil oder DC-Koeffizienten dar. Die Spektralkoeffizienten x₈ und x₅₇ sind die Spektralkoeffizienten, die jeweils die höchsten Bildfrequenzen in x- und y-Richtung zugeordnet sind. Der Spektralkoeffizient x₆₄ entspricht der höchsten Bildfrequenz entlang der Bilddiagonalen. Falls die Codiereinheit 4 zur Codierung der Bewegungsvektoren verwendet wird, können die Variablen x₁ bis x₆₄ auch verschiedene Verschiebevektoren darstellen.

Die vom diskreten Cosinus-Transformator erzeugten Spektralkoeffizienten sind idealerweise vollständig dekorreliert, d.h., benachbarte Spektralkoeffizienten sind voneinander statistisch unabhängig. Auch bei einer idealen Dekorrelation der Spektralkoeffizienten gilt dies jedoch nicht notwendigerweise für die einzelnen Bits in den Bitebenen der Spektralkoeffizienten. Hier existieren vielmehr in hohem Maß statistische Abhängigkeiten. Dies beruht auf der Tatsache, dass die Spektralkoeffizienten im allgemeinen kleine Werte aufweisen, so dass im Berech der unteren, wenig signifikanten Bitebenen die logische 1 häufig vorhanden ist.

In Figur 2 ist zum Beispiel der Spektralkoeffizient x₁₉ hervorgehoben, dessen binärer Wert in einer bestimmten Bitebenen statistisch von den binären Werten der Spektralkoeffizienten einer Kontextgruppe 15 in der jeweiligen Bitebene abhängig ist. In Figur 2 wird die Kontextgruppe 15 von den binären Werten der Spektralkoeffizienten x₁ bis x₃, x₉ bis x₁₁ sowie x₁₇ und x₁₈ in einer bestimmten Bitebene gebildet. Die Häufigkeitsverteilung der binären Werte für den Spektralkoeffizienten x₁₉ in der jeweiligen Bitebene hängt statistisch von den binären Werten der benachbarten Spektralkoeffizienten in dieser Bitebene ab.

Im folgenden werden die Werte der Variablen-xᵢ als Bildsymbole bezeichnet. Die Gesamtheit der Bildsymbole bildet ein Alphabet. Eine bestimmte Wertekombination der Variablen in einer Kontextgruppe C wird im Folgenden kurz als Kontext bezeichnet.

Die in Figur 3 im Einzelnen dargestellte, kontextsensitive Codiereinheit 4 nutzt die statistische Abhängigkeit zwischen den Bildsymbolen und dem jeweiligen zugeordneten Kontext für eine effektive Codierung aus.

In der kontextsensitiven Codiereinheit 4 werden die Variablen xᵢ durch einen Bitebenen-Scanner 16 in Bitebenen zerlegt. Die Bitebenen werden nacheinander beginnend mit der höchstwertigen Bitebene in einen Zwischenspeicher 17 übertragen. In diesem Fall gibt es somit nur zwei verschiedene Bildsymbole, nämlich die logische 0 und die logische 1.

Die Bildsymbole werden in einer vorbestimmten Reihenfolge seriell aus dem Zwischenspeicher 17 ausgelesen. Die aus dem Zwischenspeicher 17 ausgelesenen Bildsymbole werden mit Hilfe eines Kontextschalters 18 auf Codierzweige 19 sortiert. Der Kontextschalter 18 wird dabei von einem Kontextdiskriminator 20 gesteuert, der zu jedem Bildsymbol den zugehörigen Kontext bestimmt und für eine entsprechende Zuordnung der Bildsymbole zu den Codierzweigen 19 sorgt. Neben dem Kontextdiskriminator 20 ist auch eine Clustereinheit 21 vorhanden, die die Häufigkeitsverteilung der Bildsymbole in den jeweiligen Kontexten auswertet und bei einer Übereinstimmung von Häufigkeitsverteilungen der Bildsymbole in verschiedenen Kontexten den Kontextdiskriminator 20 dazu veranlasst, die hinsichtlich der Häufigkeitsverteilung der Bildsymbole übereinstimmenden Kontexte logisch zusammenzufassen und einem gemeinsamen Codierzweig 19 zuzuordnen.

Die einem der Codierzweige 19 zugeordneten Bildsymbole werden zunächst in einem Bildsymbolpuffer 22 gespeichert. Anschließend erfolgt die Umsetzung der Bildsymbole in Lauflängensymbole mit Hilfe eines Lauflängencodierers 23, der die Bildsymbole in Lauflängensymbole umwandelt. Falls die Häufigkeitsverteilung der Bildsymbole in Abhängigkeit vom jeweiligen Kontext von der Gleichverteilung abweicht, werden in den Codierzweigen 19 einige wenige Bildsymbole besonders häufig auftreten. Gleiche Bildsymbole können aber auf effektive Weise mit Hilfe des Lauflängencodierers 23 zu Lauflängensymbolen zusammengefasst werden. Bei der Lauflängencodierung werden aufeinanderfolgende gleiche Bildsymbole gezählt und durch die Auftrittszahl codiert. Die binäre Folge "000100" wird beispielsweise zu "302" codiert, wobei die "0" für die binäre "1" steht.

Im weiteren Verlauf werden die Lauflängensymbole durch einen Colomb-Codierer 24 in Codesymbole mit unterschiedlicher Codewortlänge umgewandelt. Der Golomb-Code als solcher ist dem Fachmann bekannt und nicht Gegenstand der Anmeldung.

Die Golomb-Codierung ist für die Codierung der Lauflängensymbole besonders geeignet, da die Lauflängencodierung der binären Bildsymbole eine annährend geometrische Verteilung der Lauflängensymbole ergibt. Die Colomb-Codierung eignet sich besonders für diese Art der Verteilung.

Da die Häufigkeitsverteilung der Bildsymbole von der Clustereinheit 21 fortlaufend bestimmt wird, kann die Clustereinheit 21 die Golomb-Codierer 24 so steuern, dass der von den Golomb-Codierern 24 für die Codierung der Lauflängensymbole verwendete Golomb-Code an die Häufigkeitsverteilung der in einem bestimmten Kontext auftretenden Bildsymbole angepasst ist.

Auch in diesem Zusammenhang ist der Colomb-Code von besonderen Vorteil. Denn der Golomb-Code eignet sich besonders für eine an die sich ändernde Häufigkeitsverteilung der Bildsymbole in einem bestimmten Kontext angepasste Nachführung, da der Golomb-Code parametrierbar ist und mit Hilfe eines einzelnen Parameters an die sich ändernden Häufigkeitsverteilungen von Symbolen in einem Alphabet angepasst werden kann.

Die von den Golomb-Codierern 24 erzeugten Codesymbole werden als Bitstromsegmente in einem Bitstrompuffer 25 gespeichert. Ein Multiplexer 26 setzt die Bitstromsegmente der einzelnen Codierzweige 19 zu einem einzigen Bitstromsegment zusammen, wobei die einzelnen Bitstromsegmente der Codierzweige 19 jeweils mit einem "Header" versehen sind, in dem die Länge des jeweiligen Bitstromsegments eingetragen ist.

Die Funktion des Multiplexers 26 kann auch vom Multiplexer 5 übernommen werden, der am Ausgang 6 einen komprimierten Videodatenstrom bereitstellt, in den die Informationen über die Verschiebevektoren und die Vorhersagefehlerdaten eingebettet sind.

zusammenfassend können somit folgende im der kontextsensitiven Codiereinheit 4 ausgeführte Verfahrenschritte festgehalten werden:
- Serielles Auslesen der Bildsymbole aus einem Bildspeicher 15;
- Sortieren der Bildsymbole mit Hilfe eines Kontextschalters 18 auf verschieden Codierzweige 19, die jeweils unterschiedlichen Kontexten zugeordnet sind, wobei der Kontextschalter 18 zu einem vorbestimmten Zeitpunkt in eine vorbestimmte Position gebracht und im folgenden in Abhängigkeit vom jeweiligen Kontext des zu übertragenden Bildsymbols betätigt wird;
- Lauflängencodierung der auf die Codierzweige 19 verteilten Bildsymbole zu Lauflängensymbole;
- Umsetzen der Lauflängensymbole mit Hilfe eines an die Entropie des jeweiligen Kontexts angepassten Entropiecodes in Codesymbole, die in einem Bitstromsegment zusammengefasst werden;
- Zusammensetzen der Bitstromsegmente durch den Multiplexer 26 zu einem komprimierten Videodatenstrom.

Bei einem weiteren nicht dargestellten Ausführungsbeispiel findet die Kontextauswahl nicht auf Bitebene, sondern unter den vollständigen Spektralkoeffizienten statt. Eine Kontextauswahl auf Ebene der vollständigen Spektralkoeffizienten ist dann sinnvoll, wenn aufgrund der Bildstatistik die Verarbeitung durch den diskreten Cosinus-Transformator 10 nicht die ideal dekorrelierende Transformation darstellt, so dass die Spektralkoeffizienten nicht vollständig dekorreliert sind.

In der Praxis ist die diskrete Cosinus-Transformation nicht die ideale dekorrelierende Transformation, so dass statistische Abhängigkeiten zwischen den Spektralkoeffizienten bestehen, die durch das Sortieren nach Kontexten und eine nachfolgende Golomb-Codierung ausgenutzt werden können. In diesem Fall ist allerdings die erwähnte Lauflängencodierung nicht effektiv, da die vollständigen Spektralkoeffizienten eine große Zahl von Werten annehmen können, so dass sich ein äußerst umfangreiches Alphabet ergibt. Da in diesem Fall die in Abhängigkeit von den jeweiligen Kontexten betrachteten Auftrittshäufigkeiten der Bildsymbole annährend geometrischen Verteilungen folgen, ist eine Sortierung nach Kontexten und eine an den jeweiligen Kontext angepasste Colomb-Codierung durchaus sinnvoll.

Daneben ist es auch bei dekorrelierten Spektralkoeffizienten eines Makroblocks möglich, die Spektralkoeffizienten so zu sortieren, dass für die Auswahl der Kontextgruppe nur die Spektralkoeffizienten der gleichen Frequenz, zum Beispiel alle Spektralkoeffizienten x₁, aus den benachbarten Makroblöcken betrachtet werden. Dadurch können statistische Abhängigkeiten zwischen den Spektralkoeffizienten hergestellt werden.

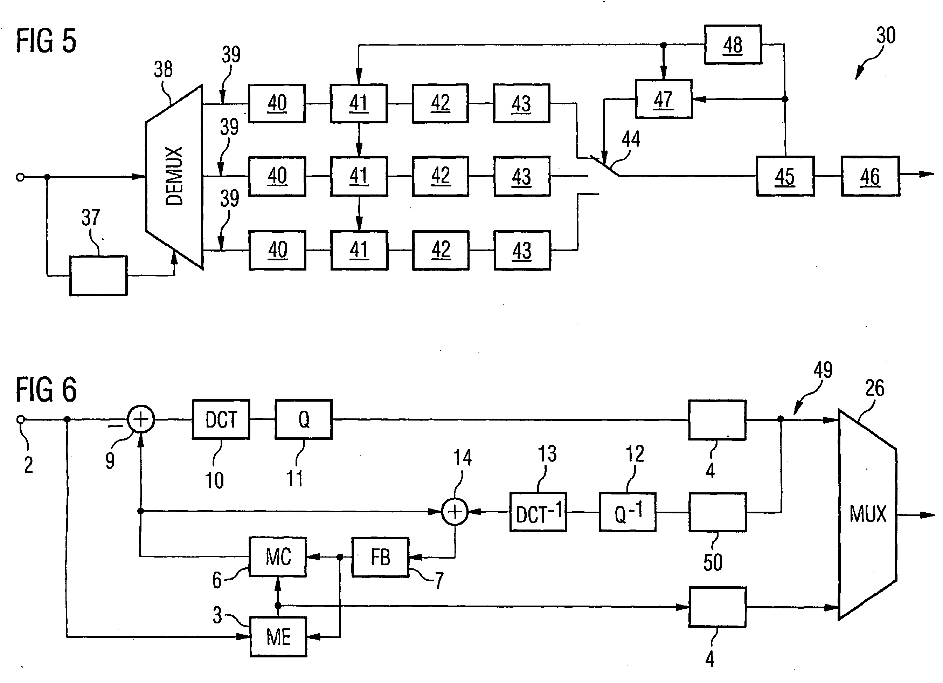

Im folgenden sei das zugehörige Decodierverfahren betrachtet. Es versteht sich, dass ein Decodierverfahren entsprechende Verfahrensschritte aufweisen muss. Ein solches Decodierverfahren sei nachfolgend anhand der Figuren 4 und 5 erläutert.

In Figur 4 ist ein Decodierer 27 für den vom Codierer 1 erzeugten Videodatenstrom dargestellt. Der Decodierer 27 empfängt den Videodatenstrom an einem Eingang 28, dem ein Demultiplexer 29 nachgeschaltet ist. Der Demultiplexer 29 führt die Information bezügliche der Verschiebevektoren über einen nachfolgend im Einzelnen beschriebenen kontextsensitiven Decoder 30 einem Bewegungskompensator 31 zu. Diejenigen Teile des Videodatenstroms, die Information zu den Vorhersagefehlern enthalten, werden einem weiteren kontextsensitiven Decodiereinheit 30 zugeführt, die aus dem einlaufenden Bitstrom die Vorhersagefehlerdaten rekonstruiert. Die Vorhersagefehlerdaten werden einem inversen Quantisierer 32 und einem inversen diskreten Cosinus-Transformator 33 zugeführt und auf die vom Bewegungskompensator 31 gelieferten Daten in einem Addierer 34 aufaddiert und in einem Bildspeicher 35 abgelegt. Der Bildspeicher 35 ist schließlich mit einer Anzeigeeinheit 36 verbunden, in der die Videobilder angezeigt werden.

In Figur 5 ist die kontextsensitive Decodiereinheit 30 im Einzelnen dargestellt. Die kontextsensitive Decodiereinheit 30 weist eine Headerparser 37 auf, der die im Bitstrom enthaltenen Headerinformationen ausliest und einen Demultiplexer 38 so steuert, dass die den einzelnen Kontexten zugeordneten Bitstromsegmente auf die Decodierzweige 39 verteilt werden. Die Bitstromsegmente werden dabei zunächst in Bitstrompuffer 40 eingeschrieben und anschließend durch einen Golomb-Decodierer 41 in eine Folge von Lauflängensymbolen umgesetzt, die von einem Lauflängendecodierer 42 in die zugeordneten Bildsymbole gewandelt und in einen Bildsymbolpuffer 43 eingeschrieben werden. Von den Bildsymbolpuffern 43 aus werden die Bildsymbole über einen Kontextschalter 44 in einen Zwischenspeicher 45 ausgelesen, dem ein Bildkomposer 46 nachgeschaltet ist, in dem die Bitebenen wieder zusammengesetzt werden.

Zu Beginn der Übertragung vom Bildsymbolpuffer 43 in den Zwischenspeicher 45 befindet sich der Kontextschalter 44 in einer vorbestimmten Stellung. Im weiteren Verlauf des Auslesevorgangs wird der Kontextschalter 44 durch einen Kontextdiskriminator 47 gesteuert. Der Kontextdiskriminator 47 bestimmt aus den ausgelesenen Bildsymbolen den Kontext des auszulesenden Bildsymbols und schaltet den Kontextschalter 44 auf den jeweiligen Decodierzweig 39 um. Wie bei der kontextsensitiven Codiereinheit 4 ist auch bei der kontextsensitiven Decodiereinheit 30 eine Clustereinheit 48 vorhanden, die die Häufigkeitsverteilung der Bildsymbole auswertet und durch Steuern des Kontextdiskriminators 47 die Zuordnung der Kontexte zu den Decodierzweigen 39 bestimmt. Außerdem steuert die Clustereinheit 48 die Golomb-Decodierer 41, indem die Clustereinheit 48 einen an die Häufigkeitsverteilung der Bildsymbole angepassten Golomb-Code auswählt. Die Regeln nach denen die Clustereinheit 48 arbeitet, müssen die gleichen sein wie die Regeln, nach denen die Clustereinheit 21 der kontextsensitiven Codiereinheit 4 arbeitet, damit der Kontextschalter 44 der kontextsensitiven Decodiereinheit 30 genau so wie der Kontextschalter 18 der kontextsensitiven Codiereinheit 4 betrieben wird.

Somit führt die kontextsensitive Decodiereinheit 30 folgende Verfahrensschritte aus:
- Verteilen von Bitstromsegmenten des Videodatenstroms durch den Demultiplexer 38 auf Decodierzweige 39, die jeweils einem Bildsymbolkontext zugeordnet sind;
- Entropiedecodieren der Bitstromsegmente in Lauflängensymbole;
- Lauflängendecodieren der Lauflängensymbole in Videodaten eines Bildes darstellende Bildsymbole;
- Übertragung der Bildsymbole von den Decodierzweigen 39 über den Kontextschalter 44 in einen Bildspeicher 45, wobei der Kontextschalter 44 zu einem vorbestimmten Zeitpunkt in einer vorbestimmten Stellung steht und im Folgenden in Abhängigkeit vom Kontext der Bildsymbole betätigt wird.

In Figur 6 ist schließlich ein abgewandelter Codierer 49 dargestellt, bei dem die transformierten Vorhersagefehlerdaten nicht unmittelbar nach dem Quantisierer 11, sondern nach der kontextsensitiven Codiereinheit 4 abgegriffen und durch eine inverse kontextsensitive Codiereinheit 50, den inversen Quantisierer 12 und den inversen diskreten Cosinus-Transformator 13 rücktransformiert werden.

Abschließend sei angemerkt, dass das hier beschriebene Verfahren immer dann angewendet werden kann, wenn ein statistischer Zusammenhang zwischen Bildsymbolen und einem Kontext besteht. Die Bildsymbole können dabei einzelne Bits oder auch Gruppen von Bits in einer Bitebene oder über mehrere Bitebenen hinweg sein. Somit ist auch ein Clustern von Bildsymbolen möglich.

Ferner sei darauf hingewiesen, dass die hier beschriebenen Verfahren und Vorrichtungen zur Kompression und Dekompression von Videodatenströmen sowohl in Hardware als auch in Software realisiert werden können. Auch eine gemischte Ausführung ist denkbar.

Das hier beschriebene Verfahren ist prinzipiell unabhängig von der einer speziellen Datenquelle und kann daher über die Codierung einer Textur hinaus auch zur Codierung der Bewegungsvektoren oder sogar zur Codierung von administrativen Informationen verwendet werden.

## Patentansprüche

1. Verfahren zur Kompression eines Videodatenstroms, bei dem Videodaten eines Bildes durch Bildsymbole dargestellt werden, mit dem Verfahrensschritt:
- Auslesen von Bildsymbolen aus einem Bildspeicher (17);
Und **gekennzeichnet durch** die folgenden Verfahrensschritte:
- Sortieren der Bildsymbole mit Hilfe eines Kontextschalters (18) auf verschiedene Codierzweige (19) zu Bildsymbolgruppen, die jeweils unterschiedlichen Kontexten zugeordnet sind, wobei der Kontextschalter (18) zu einem vorbestimmten Zeitpunkt in eine vorbestimmte Position gebracht und im folgenden in Abhängigkeit vom jeweiligen Kontext des zu übertragenden Bildsymbols betätigt wird, wobei die Codierzweige (19) während des Kompressionsvorgangs mit Hilfe einer Kontextlogik (20, 21), welche die Häufigkeitsverteilung der Bildsymbole in den jeweiligen Kontexten auswertet, adaptiv den auftretenden Kontexten der Bildsymbole zugeordnet werden;
- Entropiecodieren der Bildsymbolgruppen und Zusammensetzen der von den Codierzweigen (19) ausgegebenen Daten zu einem komprimierten Videodatenstrom.

2. Verfahren nach Anspruch 1,
bei dem die in den einzelnen Codierzweigen (19) vorhandenen Bildsymbole durch einen dem jeweiligen Codierzweig (19) zugeordneten Lauflängencodierer (23) in Lauflängensymbole gewandelt werden.

3. Verfahren nach Anspruch 2
bei dem die Lauflängensymbole mit Hilfe eines an die Häufigkeitverteilung der Bildsymbole im jeweiligen Kontext angepassten Entropiecodes durch einen Entropiecodierer (24) in Codesymbole des Entropiecodes umgesetzt werden.

4. Verfahren nach Anspruch 3,
bei dem die durch die Entropiecodierung erzeugten Bitstromsegmenten durch einen Multiplexer (26) zu einem komprimierten Videodatenstrom zusammengesetzt werden.

5. Verfahren nach Anspruch 4,
bei dem vom Multiplexer (26) in den komprimierten Videodatenstrom Informationselemente über die Länge der Bitstromsegmente eingefügt werden.

6. Verfahren nach einem der Ansprüche 1 bis 5,
bei dem für die Umwandlung der Bildsymbole in Codesymbole ein an die Häufigkeitsverteilung der Bildsymbole im jeweiligen Kontext angepasster, analytisch berechenbarer Entropiecode verwendet wird.

7. Verfahren nach einem der Ansprüche 1 bis 6,
bei dem für den Entropiecode der Golomb-Code verwendet wird.

8. Verfahren nach einem der Ansprüche 1 bis 7,
bei dem für die zu komprimierenden Videodaten Texturdaten verwendet werden.

9. Vorrichtung zur Durchführung eines Verfahrens nach einem der Ansprüche 1 bis 8,
bei der einem Bildspeicher (17) ein von einer Kontextlogik (20, 22) gesteuerter Kontextschalter (18) nachgeschaltet ist, durch den aus dem Bildspeicher (17) ausgelesene Bildsymbole in verschiedene, den jeweiligen Kontexten zugeordnete Bildsymbolgruppen sortierbar und einem Entropiecodierer (24) zuführbar sind, wobei die Kontextlogik (20, 21) die Häufigkeitsverteilung der Bildsymbole in den jeweiligen Kontexten auswertet und die Codierzweige (19) während des Kompressionsvorgangs adaptiv den auftretenden Kontexten der Bildsymbole zuordnet.

10. Vorrichtung nach Anspruch 9,
bei der Kontextschalter (18) die Bildsymbole in Abhängigkeit vom Kontext auf verschieden Codierzweige (19) verteilt, die jeweils einen Entropiecodierer (24) für einen an die Häufigkeitsverteilung der Bildsymbole im jeweiligen Kontext angepassten Entropiecode und einen Lauflängencodierer (23) aufweisen und ausgangsseitig an einen Multiplexer (26) angeschlossen sind.

11. Verfahren zur Dekompression eines komprimierten Videodatenstroms, bei dem Bildsymbole aus dem Videodatenstrom extrahiert werden, **gekennzeichnet durch** die folgenden Verfahrensschritte:
- Aufteilen des Videodatenstroms in Bitstromsegmente, die jeweils einem Kontext zugeordnet sind;
- Entropiedecodieren der Bitstromsegmente zu Bildsymbolgruppen; und
- Übertragung der Bildsymbole in den auf verschieden Decodierzweige (39) verteilten Bildsymbolgruppen über einen Kontextschalter (44) in einen Bildspeicher (45), wobei der Kontextschalter (44) zu einem vorbestimmten Zeitpunkt in einer vorbestimmten Stellung steht und im Folgenden in Abhängigkeit vom Kontext der Bildsymbole betätigt wird, wobei die Decodierzweige (39) den Kontexten der Bildsymbole während des Dekompressionsvorgangs mit Hilfe einer Kontextlogik (47, 48), welche die Häufigkeitsverteilung der Bildsymbole in den jeweiligen Kontexten auswertet, adaptiv zugeordnet werden.

12. Verfahren nach Anspruch 11,
bei dem in den Bitstromsegmente enthaltene Codesymbole durch einen Entropiedecodierer (41) in Lauflängensymbole umgewandelt werden, die nachfolgend durch einen Lauflängendecodierer (42) in Videodaten eines Bildes darstellende Bildsymbole decodiert werden.

13. Verfahren nach Anspruch 11 oder 12,
bei dem die Codesymbole in einem analytisch berechenbaren Entropiecode codiert sind.

14. Verfahren nach Anspruch 13,
bei dem die Codesymbole im Golomb-Code codiert sind.

15. Verfahren nach einem der Ansprüche 11 bis 14,
bei dem die Bitstromsegmenten des Videodatenstroms durch einen Demultiplexer (38) auf Decodierzweige (39) verteilt werden, die jeweils einem Kontext zugeordnet sind.

16. Verfahren nach einem der Ansprüche 11 bis 15,
bei dem der Demultiplexer (38) von im Bitstrom eingefügten, die Länge der Bitstromsegmente betreffenden Informationselementen gesteuert wird.

17. Verfahren nach einem der Ansprüche 11 bis 16,
bei dem für die Videodaten Texturdaten verwendet werden.

18. Vorrichtung zur Dekompression von Videodaten nach einem der Ansprüche 11 bis 17,
bei der Bitstromsegmente über eine Demultiplexer (38) auf verschiedene, den unterschiedlichen Kontexten der Bildsymbole zugeordnete Decodierzweige (39) sortierbar sind, die jeweils einen Entropiedecodierer (41) für einen Entropiecode aufweisen, und denen ein Kontextschalter (44) und ein Bildspeicher (45) nachgeschaltet sind, wobei ferner eine Kontextlogik (47, 48) vorgesehen ist, welche die Häufigkeitsverteilung der Bildsymbole in den jeweiligen Kontexten auswertet die Decodierzweige (39) den Kontexten der Bildsymbole während des Dekompressionsvorgangs adaptiv zugeordnet.

19. Vorrichtung nach Anspruch 18,
bei der die Decodierzweige (39) jeweils einen Lauflängendecodierer (42) aufweisen.

## Claims

1. Method for compression of a video data stream, in which video data of an image is represented by image symbols, with the method step:
- Reading image symbols out of an image memory (17);
and **characterised by** the following method steps:
- Sorting the image symbols with the aid of a context-sensitive switch (18) on various encoding paths (19) into image symbol groups which are each assigned to different contexts, where the context switch (18) is set to a prespecified position at a prespecified time and is subsequently activated in accordance with the relevant context of the image symbol to be transmitted, whereby the encoding paths (19) are adaptively assigned to the occurring contexts of the image symbols during the compression process with the aid of a context logic (20, 21) which evaluates the frequency distribution of the image symbols in the relevant contexts;
- Entropy encoding of the image symbol groups and merging of the data output by the encoding paths (19) into a compressed video data stream.

2. Method according to claim 1,
in which the image symbols present in the individual encoding paths (19) are converted into run length symbols by a run length encoder (23) assigned to the relevant encoding path (19).

3. Method according to claim 2,
in which the run length symbols are converted with the aid of an entropy code adapted in the relevant context to the frequency distribution of the image symbols by an entropy encoder (24) into code symbols of the entropy code.

4. Method according to claim 3,
in which the bit stream segments generated by the entropy encoding are merged by a multiplexer (26) into a compressed video data stream.

5. Method according to claim 4,
in which information elements are inserted by the multiplexer (26) into the compressed video data stream over the length of the bit stream segments.

6. Method according to one of the claims 1 to 5,
in which, for the conversion of the image symbols into code symbols, an entropy code which can be calculated analytically and is adapted to the frequency distribution of the image symbols in the relevant context is used.

7. Method according to one of the claims 1 to 6,
in which the Golumb code is used for the entropy code.

8. Method according to one of the claims 1 to 7,
in which texture data is used for the video data to be compressed.

9. Device for executing a method according to one of claims 1 to 8.
in which a context switch (18) controlled by a context logic (20, 22) is connected downstream of an image memory (17) by which image symbols read out of the image memory (17) can be sorted into different image symbol groups assigned to the relevant contexts and can be fed to an entropy encoder (24), with the context logic (20, 21) evaluating the frequency distribution of the image symbols in the relevant contexts and the encoding path (19) adaptively assigning the occurring contexts of the image symbols during the compression process.

10. Device according to claim 9,
in which the context switch (18) distributes the image symbols to various encoding paths (19) depending on their context, which each feature an entropy encoder (24) for an entropy code adapted to the frequency distribution of the image symbols in the relevant context and a run length encoder (23) and are connected on their output side to a multiplexer (26).

11. Method for decompression of a compressed video data stream, in which the image symbols are extracted from the video data stream, **characterised by** the following method steps:
- Dividing up the video data stream into bit stream segments which are each assigned to a context;
- Entropy decoding of the bit stream segments into image symbol groups; and
- Transmission of the image symbols in the image symbol groups distributed over the various decoding paths (39) via a context switch (44) into an image memory (45), where the context switch (44) is in a prespecified position at a prespecified time and is then activated in accordance with the context of the image symbols, with the decoding path (39) adaptively assigning the contexts of the image symbols during the decompression process with the aid of a context logic (47, 48), which evaluates the frequency distribution of the image symbols in the relevant contexts.

12. Method according to claim 11,
in which code symbols contained in the bit stream segments are converted into run length symbols by means of an entropy decoder (41), said run length symbols then being decoded by a run length decoder (42) into video data of an image represented by image symbols.

13. Method according to claim 11 or 12,
in which the code symbols are encoded in an analytically calculatable entropy code.

14. Method according to claim 13,
in which the code symbols are encoded in Golumb code.

15. Method according to one of the claims 11 to 14,
in which the bit stream segments of the video data stream are distributed by a demultiplexer (38) to decoding paths (39) which are each assigned to a context.

16. Method according to one of the claims 11 to 15,
in which the demultiplexer (38) is controlled by information elements inserted into the bit stream relating to the length of the bit stream segments.

17. Method according to one of the claims 11 to 16,
in which texture data is used for the video data.

18. Device for decompression of video data in accordance with one of the claims 11 to 17.
in which bit stream segments can be sorted via a demultiplexer (38) onto various decoding paths (39) assigned to the different contexts of the image symbols, each of which features an entropy decoder (41) for an entropy code and with a downstream connection to a context switch (44) and an image memory (45), with a context logic (47, 48) also being provided which evaluates the frequency distribution of the image symbols in the relevant contexts and the decoding path (39) adaptively assigning the contexts of the image symbols during the decompression process.

19. Device according to claim 18,
in which the decoding paths (39) each feature a run length decoder (42).

## Revendications

1. Procédé de compression d'un flux de données vidéo, dans lequel des données vidéo d'une image sont représentées par des symboles d'images, comportant l'étape suivante:
- extraction de symboles d'images hors d'une mémoire d'images (17),
et **caractérisé par** les étapes suivantes:
- répartition des symboles d'images à l'aide d'un commutateur de contexte (18) sur différentes branches de codage (19) pour obtenir des groupes de symboles d'images qui sont respectivement affectés à différents contextes, le commutateur de contexte (18) étant mis dans une position prédéterminée à un instant prédéterminé et étant ensuite actionné en fonction du contexte respectif du symbole d'image à transmettre, les branches de codage (19), pendant l'opération de compression, étant affectées adaptativement aux contextes, qui se présentent, des symboles d'images à l'aide d'une logique de contexte (20, 21) qui évalue la distribution de fréquence des symboles d'images dans les contextes respectifs;
- codage entropique des groupes de symboles d'images et assemblage des données produites en sortie par les branches de codage (19) pour obtenir un flux de données vidéo compressé.

2. Procédé selon la revendication 1, dans lequel les symboles d'images présents dans les différentes branches de codage (19) sont convertis en symboles RLE (run length encoding) par un codeur RLE (23) affecté à la branche de codage respective (19).

3. Procédé selon la revendication 2, dans lequel les symboles RLE sont convertis en symboles de code du code entropique par un codeur entropique (24) à l'aide d'un code entropique adapté à la distribution de fréquence des symboles d'images dans le contexte respectif.

4. Procédé selon la revendication 3, dans lequel les segments de flux de bits générés par le codage entropique sont assemblés par un multiplexeur (26) en un flux de données vidéo compressé.

5. Procédé selon la revendication 4, dans lequel des éléments d'information sur la longueur des segments de flux de bits sont insérés par le multiplexeur (26) dans le flux de données vidéo compressé.

6. Procédé selon l'une des revendications 1 à 5, dans lequel est utilisé, pour la conversion des symboles d'images en symboles de code, un code entropique calculable analytiquement et adapté à la distribution de fréquence des symboles d'images dans le contexte respectif.

7. Procédé selon l'une des revendications 1 à 6, dans lequel le code de Golomb est utilisé pour le code entropique.

8. Procédé selon l'une des revendications 1 à 7, dans lequel des données de texture sont utilisées pour les données vidéo à compresser.

9. Dispositif permettant d'exécuter un procédé selon l'une des revendications 1 à 8, dans lequel est situé, en aval d'une mémoire d'images (17), un commutateur de contexte (18) commandé par une logique de contexte (20, 22), lequel permet de répartir des symboles d'images extraits de la mémoire d'images (17) en différents groupes de symboles d'images affectés aux contextes respectifs et de les amener à un codeur entropique (24), la logique de contexte (20, 21) évaluant la distribution de fréquence des symboles d'images dans les contextes respectifs et affectant adaptativement, pendant l'opération de compression, les branches de codage (19) aux contextes, qui se présentent, des symboles d'images.

10. Dispositif selon la revendication 9, dans lequel le commutateur de contexte (18) distribue les symboles d'images en fonction du contexte sur différentes branches de codage (19) qui comportent respectivement un codeur entropique (24) pour un code entropique adapté à la distribution de fréquence des symboles d'images dans le contexte respectif et un codeur RLE (23) et sont raccordées, côté sortie, à un multiplexeur (26).

11. Procédé de décompression d'un flux de données vidéo compressé, dans lequel des symboles d'images sont extraits du flux de données vidéo, **caractérisé par** les étapes suivantes:
- séparation du flux de données vidéo en segments de flux de bits qui sont respectivement affectés à un contexte;
- décodage entropique des segments de flux de bits en groupes de symboles d'images et
- transmission, vers une mémoire d'images (45), des symboles d'images dans les groupes de symboles d'images distribués sur différentes branches de codage (39) par l'intermédiaire d'un commutateur de contexte (44), le commutateur de contexte (44) étant dans une position prédéterminée à un instant prédéterminé et étant ensuite actionné en fonction du contexte des symboles d'images, les branches de décodage (39), pendant l'opération de décompression, étant affectées adaptativement aux contextes des symboles d'images à l'aide d'une logique de contexte (47, 48) qui évalue la distribution de fréquence des symboles d'images dans les contextes respectifs.

12. Procédé selon la revendication 11, dans lequel des symboles de code contenus dans les segments de flux de bits sont convertis par un décodeur entropique (41) en symboles RLE qui sont ensuite décodés par un décodeur RLE (42) en symboles d'images représentant des données vidéo d'une image.

13. Procédé selon la revendication 11 ou 12, dans lequel les symboles de code sont codés dans un code entropique calculable analytiquement.

14. Procédé selon la revendication 13, dans lequel les symboles de code sont codés dans le code de Golomb.

15. Procédé selon l'une des revendications 11 à 14, dans lequel les segments de flux de bits du flux de données vidéo sont distribués par un démultiplexeur (38) sur des branches de décodage (39) qui sont respectivement affectées à un contexte.

16. Procédé selon l'une des revendications 11 à 15, dans lequel le démultiplexeur (38) est commandé par des éléments d'information insérés dans le flux de bits et concernant la longueur des segments du flux de bits.

17. Procédé selon l'une des revendications 11 à 16, dans lequel des données de texture sont utilisées pour les données vidéo.

18. Dispositif de décompression de données vidéo selon l'une des revendications 11 à 17, dans lequel des segments de flux de bits peuvent être répartis par l'intermédiaire d'un démultiplexeur (38) sur différentes branches de décodage (39) affectées aux différents contextes des symboles d'images, lesquelles comportent respectivement un décodeur entropique (41) pour un code entropique et en aval desquelles sont situés un commutateur de contexte (44) et une mémoire d'images (45), une logique de contexte (47, 48) étant en outre prévue, laquelle évalue la distribution de fréquence des symboles d'images dans les contextes respectifs et affecte adaptativement les branches de décodage (39) aux contextes des symboles d'images pendant l'opération de décompression.

19. Dispositif selon la revendication 18, dans lequel les branches de décodage (39) comportent respectivement un décodeur RLE (42).
